# EUROPÄISCHE PATENTSCHRIFT

(11) **EP 1 214 812 B1**
(45) Veröffentlichungstag und Bekanntmachung des Hinweises auf die Patenterteilung: **20.01.2010**
(21) Anmeldenummer: 00960396.0
(22) Anmeldetag: 04.08.2000
(51) Int. Cl.: H04L 9/08, H04L 9/32, G06K 9/00

(54) **VERFAHREN ZUM SCHUTZ VON DATEN**
METHOD OF DATA PROTECTION
PROCEDE POUR PROTEGER DES DONNEES

(30) Priorität: 25.08.1999 DE 19940341
(43) Veröffentlichungstag der Anmeldung: 19.06.2002
(73) Patentinhaber: Giesecke & Devrient GmbH, 81677 München (DE)
(72) Erfinder: VOGEL, Kolja, D-33604 Bielefeld (DE); BEINLICH, Stephan, D-80639 München (DE); MARTINI, Ullrich, D-81669 München (DE)
(74) Vertreter: Höhfeld, Jochen
(86) Internationale Anmeldenummer: PCT/EP2000/007597
(87) Internationale Veröffentlichungsnummer: WO 2001/015378

(56) Entgegenhaltungen:
- EP-A- 0 867 827
- WO-A-98/52317
- WO-A-99/33219
- DE-A- 4 243 908
- US-A- 5 228 094
- US-A- 5 708 667
- DAVIDA, FRANKEL,MATT: "On enabling secure applications through off-line biometric identification" 1998 IEEE SYMPOSIUM ON SECURITY AND PRIVACY, 3. - 6. Mai 1998, XP002154556 Oakland USA

## Beschreibung

Die Erfindung betrifft den Schutz von Daten, insbesondere ein Verfahren für die Gewährleistung von Authentizität und Integrität von digitalisierten Daten anhand biometrischer Merkmale.

Im Zuge der zunehmenden Globalisierung in fast allen Bereichen der Wirtschaft kommt insbesondere den neuen Informationstechnologien eine immer größere Bedeutung zu. An erster Stelle ist hierbei an die fortschreitende Nutzung von elektronischen Kommunikationsnetzwerken, deren bekannteste Ausprägung das Internet sein dürfte, zu denken. Der zunehmende internationale Austausch von Waren und Dienstleistungen macht allerdings eine sichere Informationsweitergabe unumgänglich. Derzeit übersteigt die Menge an monetären Transaktionen in ihrem Wert den des Warenaustausches um ein Vielfaches. Dieser Datenverkehr wird derzeit in irgendeiner Form über elektronische Kommunikationsnetzwerke (z.B.: elektronische Transaktionen wie etwa E-Commerce) abgewickelt. Diese Kommunikationsform erfordert aber ebenso wie im nicht-elektronischen Bereich, dass die Transaktionspartner sich auf Aussagen (insbesondere Willenserklärungen) bei der Transaktion sowohl auf den Inhalt als auch auf die Identität des jeweiligen anderen verlassen können müssen. Da jedoch bei diesen elektronischen Transaktionen (Online-Transaktionen) in der Regel kein unmittelbarer Kontakt der Transaktionspartner stattfindet und die Daten nur in elektronischer Form vorliegen, ist dies nicht wie sonst üblich per Augenschein möglich. Ohne die Möglichkeit der Authentifizierung und dem Schutz vor Manipulation von Transaktionsdaten ist eine Realisierung nicht denkbar. Aber auch in Hinblick auf den Schutz elektronischer gespeicherter Personendaten ist eine sichere Überprüfung der Datenintegrität von großer Bedeutung. Digitale Signaturen sind dabei eine Möglichkeit, die Authentizität und Integrität von Daten sicherzustellen. Nur befugte Personen, Gruppen oder Maschinen können Veränderungen an Daten vornehmen. Zusätzlich kann jeder feststellen, ob eine Signatur authentisch ist.

Bekannte Signaturverfahren benutzen dabei ein sogenanntes asymmetrisches Verschlüsselungsverfahren. Der prinzipielle Ablauf eines solchen Verfahrens sei im folgenden skizziert:

Für jeden Beteiligten am Signatursystem wird hierbei ein Schlüsselpaar generiert, beispielsweise ein geheimer und ein öffentlicher Schlüssel, das in einem bestimmten mathematischen Verhältnis zueinander stehen. Zum Erzeugen der digitalen Signatur benutzt der Absender seinen geheimen Schlüssel, in der Regel als spezielles Unterschriftsmerkmal. Das zu unterschreibende Dokument wird zunächst mit einem sogenannten Hash-Verfahren komprimiert, das so entstandene Komprimat nach einem vorgegebenen Algorithmus mit dem geheimen Schlüssel verknüpft und das Ergebnis als digitale Signatur dem zu übertragenden Dokument angehängt. Der Empfänger komprimiert nun ebenfalls das Dokument und vergleicht dieses Komprimat mit dem in der digitalen Signatur enthaltenen Komprimat, das sich durch Entschlüsseln der Signatur mit dem öffentlichen Schlüssel des Absenders ergibt. Bei Übereinstimmung steht fest, dass der gesendete und empfangene Text gleich sind, d.h. es also weder Manipulationen noch Übertragungsfehler gegeben hat. Ferner steht aber auch fest, dass nur der Absender, der im Besitz des geheimen Schlüssels ist, die Signatur erzeugt haben kann, weil sonst der öffentliche Schlüssel nicht "passen" würde, d.h. also keine Transformation auf das ursprüngliche Komprimat hätte erfolgen können.

Die Sicherheit moderner Signaturverfahren beruht auf der Tatsache, dass der private Signaturschlüssel nach heutigem Wissensstand selbst dann nicht ermittelt werden kann, wenn dem Angreifer sowohl der Klartext, der signierte Text als auch der zugehörige öffentliche Signaturschlüssel zur Verfügung stehen. Ein Beispiel für ein asymmetrisches Verschlüsselungsverfahren ist RSA. Das RSA-Verfahren hat seinen Namen nach denen seiner Entwickler erhalten: Ronald L. Rivest, Adi Shamir und Leonard Adleman, die das Verfahren 1977 ("On Digital Signatures and Public Key Cryptosystems", MIT Laboratory for Computer Science Technical Memorandum 82, April 1977) bzw. 1978 ("A Method for Obtaining Digital Signatures and Public-Key Cryptosystems" , Communications of the ACM 2/1978) vorstellten. Grundlage von RSA sind zahlentheoretische Überlegungen, bei denen angenommen wird, dass große Zahlen nur schwer faktorisierbar, d.h. in Primfaktoren zerlegbar sind. Es handelt sich um das sogenannte Faktorisierungsproblem. Der vermutete Rechenaufwand ist dabei so groß, dass die Verschlüsselung bei geeignet gewählten Schlüsseln durch eine brute-force Attacke praktisch nicht zu brechen ist. Kryptoanalytische Angriffe sind nicht publiziert.

Somit kann mit Hilfe eines derartigen asymmetrischen Verschlüsselungsverfahrens ein signiertes Dokument eindeutig einem Signaturschlüssel zugeordnet werden. Die Zuordnung eines signierten Dokuments zu einer Person oder Organisation ist jedoch weiterhin problematisch. Damit sie gelingen kann, müssen die nachfolgend genannten Voraussetzungen gewährleistet werden, d.h., dass erstens nur der rechtmäßige Besitzer Zugang zu seinem privaten Signaturschlüssel erhält und zweitens jedem öffentlichem Schlüssel der rechtmäßige Besitzer des zugehörigen privaten Schlüssels in eindeutiger Weise zugeordnet ist.

Um die erstgenannte Voraussetzung zu erfüllen, gibt es die Möglichkeit, den rechtmäßigen Besitzer des Signaturschlüssels durch biometrische Merkmale zu identifizieren.

Um die letztgenannte Voraussetzung zu erfüllen, schalten viele Systeme sogenannte Trusted Third Parties ein: Dritte, die nicht unmittelbar an der Transaktion beteiligt sind und deren Vertrauenswürdigkeit als gesichert angesehen werden kann. Das System gegenseitigen Vertrauens und Kontrollen wird häufig als "Trust"-Modell bezeichnet.

Beispiele für die Benutzung von Signaturverfahren zur Authentifizierung und Überprüfung von Datenintegrität sind: Verträge, die elektronisch über das Internet oder ein sonstiges Datennetz abgeschlossen werden; Elektronische Transaktionen (Stichwort: E-Commerce); Zugangskontrolle zu Resourcen (etwa Datenverbindungen oder externe Speichersysteme); Prozesssteuerungsdaten, die exportiert und in fertigungstechnische Anlagen eingelesen werden; Personendatenverwaltung (etwa Patientendatenverwaltung oder bei Behörden)

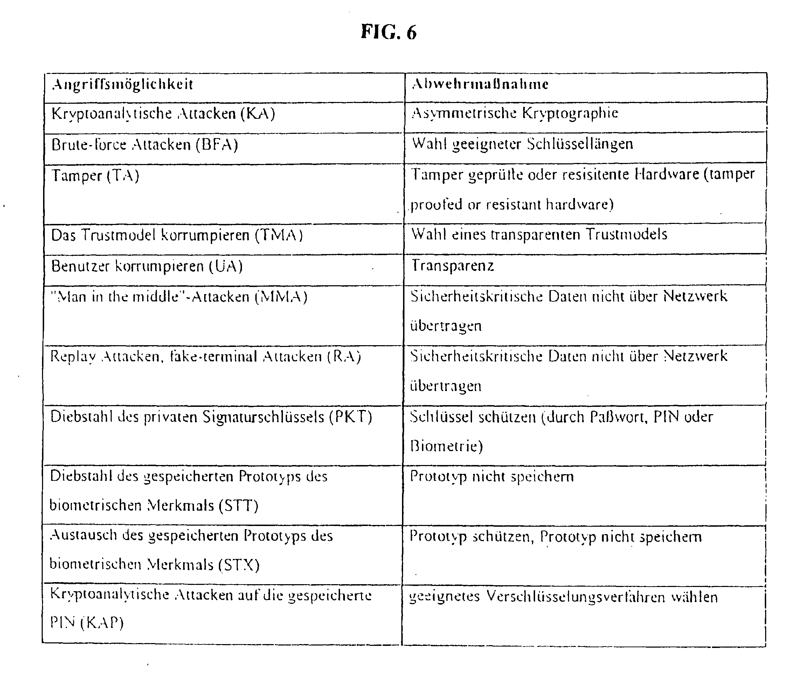

Wie bei jedem Sicherheitssystem, gibt es auch bei den heute bekannten Signaturverfahren zahlreiche Angriffsmöglichkeiten, sogenannte Attacken. Diese sind in Fig. 6 in einer Tabelle aufgeführt.

Bekannte Signatursysteme sind beispielsweise sogenannte Smart Card Systeme. Viele auf Smart Card basierende Systeme bieten guten Schutz gegenüber Angriffen auf den Schlüssel selbst (kryptoanalytische Attacken), gegen brute-force Attacken (BFA) und gegen Angriffe auf die Hardware, auf welcher der Schlüssel gespeichert ist. Dagegen sind replay- und fake-terminal Attacken (RA) sowie Attacken auf die Benutzer relativ erfolgversprechend, d.h., Smart Card Systeme stellen hinsichtlich dieser Attacken ein Sicherheitsrisiko dar.

Einige Systeme versuchen, die Benutzer vor Diebstahl des Signaturschlüssels zu schützen. Sowohl PIN als auch biometrische Verfahren kommen zum Einsatz. Attacken gegen das "Trust"-Modell (TMA) werden von den meisten Anbietern von Authentifizierungssystemen noch nicht einmal diskutiert. -

Im folgenden soll ein herkömmliches System beschrieben werden, das digitale Signaturen und die Messung biometrischer Merkmale kombiniert. Sowohl der private Signaturschlüssel des Kunden als auch ein Muster oder Prototyp (das sogenannte Template) der digitalen Repräsentation des gemessenen biometrischen Merkmals liegen in gespeicherter Form vor. Im einzelnen werden folgende Authentifizierungsmaßnahmen getroffen: Der Benutzer identifiziert sich - zum Beispiel durch Eingabe einer PIN oder indem ein biometrisches Merkmal ausgelesen wird. Die biometrischen Daten werden validiert, indem diese mit einem Template verglichen werden. Ist der Abstand des gemessenen Merkmals zum Prototyp kleiner als ein Schwellenwert, wird die Transaktion freigegeben. Dieser Abgleich findet in Lesegeräten oder in einer zentralen Clearingstelle statt. Im letzteren Fall werden die biometrischen Daten - verschlüsselt oder im Klartext - über Netzwerke übertragen. Der private Signaturschlüssel wird freigegeben. Der Benutzer identifiziert sich, indem er das Dokument digital signiert. Meist ist das RSA Verfahren oder ein anderes asymmetrisches Verschlüsselungsverfahren implementiert. Häufig ist dieses auf einer Smart Card oder einer anderen vor Manipulationen geschützten ("tamper"-resistenten) Hardware implementiert. Das signierte Dokument wird über ein Netzwerk übertragen. Die kryptographische Operation wird mittels des öffentlichen Signaturschlüssel des Benutzers validiert.

Die Sicherheit dieser Verfahren beruht darauf, dass der private Signaturschlüssel die Smart Card nicht verlässt. "Man in the middle"-Attacken (MMA) auf den privaten Signaturschlüssel selbst sind damit nicht möglich, solange die Smart Card in den Händen des legitimen Besitzers bleibt.

Ein Beispiel für ein Verfahren, bei dem sowohl der private Signaturschlüssel des Kunden als auch ein Prototyp der digitalen Repräsentation des gemessenen biometrischen Merkmals in gespeicherter Form vorliegen, kann der WO 09912144 A1 entnommen werden.

Das in WO 09912144 Al vorgeschlagene Verfahren sieht vor, dass das Template in einer zentralen Clearingstelle in gespeicherter Form vorliegt. Diese signiert im Namen des Benutzers digital, wenn der Abstand des gemessenen biometrischen Merkmals zum Prototyp kleiner als ein Schwellenwert ist.

Das in WO 09912144 Al vorgeschlagenen Verfahren weist jedoch den Nachteil auf, dass es inhärent einige Sicherheitsprobleme in sich birgt: Erstens muss der Benutzer dem Lesegerät, in welches das biometrische Merkmal eingelesen wird, der Clearingstelle und den öffentlichen Netzwerken vertrauen. Damit sind fake-terminal Attacken möglich. Anschließend kann die digitale Repräsentation des biometrischen Merkmals in das Lesegerät eingelesen werden (sogenannte replay Attacke (RA)). Zweitens sind auch Angriffe auf das Lesegerät oder auf die Entität, bei der das Template gespeichert ist (SKT), möglich. Solche Angriffe haben das Ziel, das Template des digitalen Repräsentation des gemessenen biometrischen Merkmals auszulesen. Diese Attacken können auch online ausgeführt werden (MMA). Drittens können die dem Template der digitalen Repräsentation des gemessenen biometrischen Merkmals zugeordneten Daten ausgetauscht werden (STX).

Die WO 09850875 beschreibt ein sogenanntes biometrisches Identifikationsverfahren, das ein digitales Signaturverfahren und Biometrie verwendet. Bei diesem Verfahren wird verhindert, dass das Template der digitalen Repräsentation des gemessenen biometrischen Merkmals ausgetauscht wird (STX), indem es dieses in einem sogenannten biometrischen Zertifikat speichert: Das Template, sowie diesem zugeordnete Benutzerdaten, werden von einer Zertifizierungsstelle validiert und digital signiert. Dies verhindert, dass die Benutzerdaten, die dem Template zugeordnet sind, ausgetauscht werden können. Der Nachteil ist jedoch, dass damit nicht die Möglichkeit von Replay Attacken ausgeschlossen werden kann.

Die WO 98/52317 beschreibt ebenfalls ein digitales Signaturverfahren. Das Verfahren gemäß WO 98/52317 versucht die Angriffe STT und STX zu vereiteln, indem es ohne eine Speicherung der digitalen Repräsentation (Template) des biometrischen Merkmals (BM) auskommt. Dabei wird in einer Initialisierungsphase aus dem BM eine sogenannte Instanz, d.h. Vertreter bzw. konkretes Beispiel einer Klasse, eines Problems erzeugt, dessen Lösung das BM darstellt. Die digitale Repräsentation ist somit nicht explizit gespeichert, sondern in der Instanz des Problems verborgen. WO 98/52317 schlägt vor, das Problem so zu gestalten, dass die digitalen Repräsentation in einer Masse ähnlicher Daten verborgen ist (camouflage).

Die Erfassung eines biometrischen Merkmals zur weiteren computergestützten Verarbeitung setzt eine Analog/Digital-Wandlung voraus, die aufgrund eines stets endlichen, wenn auch sehr genauen Auflösungsvermögen oftmals Rundungsfehler bei den digitalisierten Messwerte liefern wird. Außerdem ist es etwa bei der Erfassung von biometrischen Merkmalen nicht realistisch anzunehmen, dass der Benutzer immer exakt gleiche Positionen bezüglich der Messsensorik einnehmen wird. Bei Messungen von verhaltensbiometrischen Merkmalen stellt sich das zusätzliche Problem, dass nicht zu erwarten ist, dass der Benutzer sein Verhalten zweimal exakt repliziert. Der Sinn der Verwendung von biometrischen Merkmalen ist jedoch gerade ihre absolut eindeutige Zuordnung zu einem Menschen (z.B.: Fingerabdruck, Netzhaut usw.). Daher sind Angaben über die notwendige Fehlertoleranz bzw. Angaben, wie aus den variierenden Messwerten eine eindeutige Zuordnung erfolgen soll, unerlässlich. WO 98/52317 gibt jedoch keine Angaben dazu, wie groß die Fehlertoleranz dieses Verfahrens ist. Ebenso bleibt es unklar, wie groß die Menge an tarnender Information sein muss, damit die Lösung des Problems nicht ausgelesen werden kann. Dies ist eine für die Quantifizierung oder auch nur Abschätzung der Sicherheit des Verfahrens notwendige Voraussetzung.

DE 4243908 AI versucht die Angriffe PKT, TA, STT, und STX zu verhindern, indem es ohne eine Speicherung des privaten Signaturschlüssels und ohne eine Speicherung der digitalen Repräsentation des biometrischen Merkmals auskommt. Das geschieht auf folgende Weise: Ein biometrisches Merkmal ABM wird gemessen. Das biometrische Merkmal ABM wird digitalisiert. Aus der digitalen Repräsentation des biometrischen Merkmals wird ein sogenannter individueller Wert fester Länge IW berechnet. Aus dem individuellen Wert IW wird der private Signaturschlüssel SK(A) des Senders berechnet. Die Nachricht wird mittels dieses Schlüssels SK(A) verschlüsselt.

Dabei ist jedoch nachteilig, dass die Berechnung von IW mittels einer Funktion f, die eine gewisse Fehlertoleranz aufweist, geschehen soll, da unklar ist, wie diese Fehlertoleranz, auf die es entscheidend ankommt, für eine derartige Funktion bestimmt werden soll. In der Anmeldung wird nur gefordert, dass sie "nur mit einer so geringen Wahrscheinlichkeit, dass dies mit der Sicherheit des Systems zu vereinbaren ist" zwei Benutzern denselben individuellen Wert zuweist. Ebenso ist es nachteilig, dass es unklar ist, welche Funktionen oder Klassen von Funktionen die in der Anmeldung geforderten Eigenschaften aufweisen sollen. Vielmehr lässt die Beschreibung der Anmeldung den Schluss zu, dass zwar einerseits eine Kollisionsfreiheit für die Funktion f, d.h., es soll unmöglich sein, zwei Eingabewerte für denselben Funktionswert zu finden gefordert wird, sie aber andererseits eine gewisse Fehlertoleranz aufweisen soll. Eine solche Funktion, die diese sich diametral gegenüberstehenden Voraussetzungen aufweist, kann es aber per definitionem nicht geben. Dies hat jedoch zur Folge, dass die stets reproduzierbare Generierung des gleichen privaten Schlüssels aus neuen Messwerten des gleichen biometrischen Merkmals, nicht zweifelsfrei möglich ist, d.h. signierte Dokumente bzw. Daten nicht mit bekannten öffentlichen Schlüsseln identifiziert bzw. authentifiziert werden können.

In der US005832091A wird ein Verfahren zur Gewinnung eines eindeutigen Wertes aus einem Fingerabdruck beschrieben. Dieses Verfahren funktioniert wie folgt: in einem ersten Schritt wird der Fingerabdruck fouriertransformiert. Anschließend werden die Fourierkoeffizienten einer Abbildung unterzogen, die vom Template des Fingerabdrucks und der Auflösung des Messgeräts abhängt. Aus der Rücktransformierten wird ein eindeutiger Wert gewonnen, aus dem sich ein Signaturschlüssel ermitteln lässt. Das Verfahren weist jedoch die folgenden Nachteile auf, nämlich das Verfahren funktioniert nur für Fingerabdrücke, das Verfahren benötigt eine Fouriertransformation, für die Abbildung, die vom Template abhängt, lässt sich nicht ermitteln, wie viel Information über das Template sie preisgibt. Damit ist eine Quantifizierung der Sicherheit gegen brute-force Attacken nicht möglich, und das Verfahren korrigiert lediglich Fehler, die durch das Auflösungsvermögen des Messgerätes bedingt sind. Es bleibt unklar, ob auch Fehler, die z. B. durch Verschmutzung oder auch kleine Verletzungen der Fingerkuppen entstanden sind, korrigiert werden.

Die Veröffentlichung "On enabling secure applications through off-line biometric identification" von Davida, Frankel, Matt, 1998, IEEE Symposium on Security and Privacy, 3. Mai 1998 bis 6. Mai 1998 beschäftigt sich mit der Tatsache, daß Entwickler für sichere Applikationen und Systeme oft eine sichere Benutzeridentifikation in der Entwicklungsspezifikation unterbringen müssen. Es werden sichere offline-authentifizierte Benutzeridentifikationsschemas untersucht, welche auf einem biometrischen System basieren, das biometrische Merkmale eines Benutzers genau erfassen kann (bis zu einer gewissen Hemming-Distanz). Die vorgestellten Schematas verbessern die Identifikation und Autorisierung in Sicherheitsanwendungen, indem ein biometrisches Merkmal mit einer Autorisierungsinformation auf einem Token, wie z.B. einem Magnetstreifen, verbunden werden. Es werden auch Schematas untersucht, die im besonderen dafür entwickelt sind, um den Kompromiß der biometrischen Daten des Benutzers, welche in der Autorisierungsinformation enthalten sind, ohne sichere Hardwaretoken zu erfordern, zu minimieren. Darüber hinaus wird die Realisierbarkeit der Biometrie untersucht, welche als eine mögliche Technologie für die Entwicklung von sicheren Systemen und Anwendungen dient. Ferner wird eine Technologie untersucht, die es erlaubt biometrische Merkmale des Benutzers für kryptographische Mechanismen zu verwenden.

WO 99/33219 offenbart, daß in einem Kryptosystem für einen öffentlichen Schlüssel die privaten Schlüssel der Benutzer beim Server neben den jeweiligen öffentlichen Schlüsseln der Benutzer gespeichert sind, da sie mit einem symmetrischen Algorithmus verschlüsselt sind, in dem individuelle Benutzeridentifizierungsschlüssel verwendet werden. Der Server benutzt eine ID eines Benutzers, welche ihm vom Benutzergerät übertragen worden ist, um den abgespeicherten verschlüsselten privaten Schlüssel und den öffentlichen Schlüssel des Benutzers zu lesen. Der verschlüsselte private Schlüssel wird dann über das Netzwerk zu dem Benutzergerät übertragen und dann wird lokal im Benutzergerät der empfangene verschlüsselte private Schlüssel unter Verwendung des Benutzeridentifizierungsschlüssels entschlüsselt. Der Benutzeridentifizierungsschlüssel kann beim Benutzergerät bestimmt werden, indem das vom Benutzer eingegebene Paßwort oder die biometrische Information des Benutzers (Fingerabdruck, Sprache, Abtastung der Retina oder Abtastung des Gesichts) verwendet werden. Der private Schlüssel wird nur bei Bedarf an das Benutzergerät geschickt und nach der Benutzung werden der private Schlüssel und der Benutzeridentifizierungsschlüssel auf dem Benutzergerät gelöscht.

Allen genannten Verfahren ist somit gemeinsam nachteilig, dass sie keine quantitativen Aussagen über den rechentechnischen Aufwand einer brute-force Attacke und damit den Schutz vor Entschlüsselung ermöglichen. Somit sind sie einer Quantifizierung des Schutzes durch Biometrie nicht zugänglich.

Demgegenüber liegt der Erfindung die Aufgabe zugrunde, ein Verfahren zum Schutz von Daten zu schaffen, dass eine gegenüber den Verfahren im Stand der Technik erhöhte Sicherheit aufweist.

Ferner ist es eine Aufgabe der Erfindung, ein Verfahren zu schaffen, das die sichere Verschlüsselung des Signaturschlüssels mit Hilfe von biometrischen Merkmalen ermöglicht.

Eine weitere Aufgabe der Erfindung besteht in der Schaffung einer Quantifizierungsmöglichkeit des Verschlüsselungsschutzes durch Biometrie bei einem derartigen Verfahren.

Diese Aufgaben werden durch die im Anspruch 1 bzw. 21 angegeben Merkmale gelöst.

Die Erfindung verwendet anmeldungsgemäß ein Signaturverfahren, bei dem der private bzw. geheime Schlüssel (Signaturschlüssel) mit Daten verschlüsselt wird, die aus einem biometrischen Merkmal des Besitzers des privaten Schlüssels gewonnen werden. Durch die Verschlüsselung kann eine Gewährleistung dahingehend erzielt werden, dass derjenige, der seine digitale Unterschrift mit Hilfe des Signaturschlüssels gegeben hat, auch der rechtmäßige Besitzer ist.

Dazu wird in einem ersten Schritt in der Authentifizierungsphase (Verifikation) ein biometrisches Merkmal des Besitzers des Signaturschlüssels, vorzugsweise dessen handschriftliche Unterschrift, bereitgestellt. Dazu werden Messdaten von dem biometrischen Merkmal gewonnen.

In einem zweiten Schritt werden zum Erfassen und weiteren Verarbeiten des biometrischen Merkmals seine Messdaten digitalisiert.

In einem dritten Schritt wird der Signaturschlüssel wiederhergestellt. Dazu wird zunächst der Signaturschlüssel anhand des in der Authentfizierungsphase gemessenen biometrischen Merkmals entschlüsselt und anschließend anhand eines kodierungstheoretischen Verfahrens wiederhergestellt. Alternativ kann auch zunächst das in der Initialisierungsphase gemessene biometrische Merkmal anhand eines kodierungstheoretischen Verfahrens aus dem biometrischen Merkmal, das in der Authentifizierungsphase gemessen wurde, wiederhergestellt werden. Dieses entschlüsselt dann den Signaturschlüssel. Die Korrekturkapazität des Fehlerkorrekturverfahrens ist frei wählbar, d. h., der ursprüngliche, fehlertolerant kodierte Wert wird nur dann wiederhergestellt, wenn die Eingabe des Fehlerkorrekturverfahrens nicht zu weit davon abweicht.

Es werden bei dem anmeldungsgemäßen Verfahren an keiner Stelle geheime Daten, d.h. der Signaturschlüssel sowie die digitalisierten Merkmalsdaten oder geheime Teile davon, gespeichert, so dass ein Austausch oder ein Diebstahl des Prototyps des biometrischen Merkmals nicht möglich ist. Daher werden durch dieses anmeldungsgemäße Verfahren folgende Angriffsmöglichkeiten abgewehrt:
- KA durch den Einsatz eines asymmetrischen Verschlüsselungsverfahrens;
- PKT Attacken sind nicht möglich, da der Signaturschlüssel nicht gespeichert wird;
- Angriffe STT und STX werden ebenso verhindert, da die digitale Repräsentation des biometrischen Merkmals, bzw. der relevante geheime Anteil daraus, nicht gespeichert wird.
- MMA Attacken werden verhindert, da das biometrische Merkmal nicht über ein Datennetz übertragen wird.
- In einer vorteilhaften Ausführungsform werden RA Attacken dadurch verhindert, dass das biometrische Merkmal nicht in ein fremdes Lesegerät eingelesen wird. In einer anderen vorteilhaften Ausführungsform, welche fremde Lesegeräte voraussetzt, sind RA Attacken gegenüber dem Stand der Technik erschwert, da das Verfahren insbesondere gemäß Anspruch 7 zwei exakt gleiche digitale Repräsentationen des biometrischen Merkmals zurückweist.

Anspruch 2 stellt eine vorteilhafte Ausführungsform einer Initialisierungsphase (Enrolment) zur Authentifizierungsphase des anmeldungsgemäßen Verfahrens dar. Dabei wird in einem Schritt das betreffende biometrische Merkmal entsprechend digitalisiert. In einem weiteren Schritt werden geheime Daten bereitgestellt. Bei einem public-key Verfahren erfolgt die für ein asymmetrisches Signaturverfahren notwendige Schlüsselerzeugung, d. h. die Generierung eines Signaturschlüssels. In einem weiteren Schritt werden die geheimen Daten anhand eines kodierungstheoretischen Verfahrens fehlertolerant kodiert und anhand des biometrischen Merkmals verschlüsselt.

Anspruch 3 stellt eine vorteilhafte Ausführungsform der Initialisierungsphase dar. Dabei werden zunächst die geheimen Daten fehlertolerant kodiert. Das resultierende Kodewort ist länger als die ursprüngliche Nachricht; die redundante Information dient zur Dekodierung einer Nachricht, bei der einige Bits umgefallen sind. Anschließend wird das Kodewort anhand des biometrischen Merkmals verschlüsselt.

Anspruch 4 stellt eine vorteilhafte Ausführungsform des in Anspruch 3 beschriebenen Verfahrens dar. Dabei wird das Kodewort erzeugt, indem die geheimen Daten mit einer generierenden Matrix multipliziert werden. Das ist beispielsweise eine effiziente Methode, den Raum erlaubter Kodeworte zu repräsentieren.

Anspruch 5 stellt eine Variante der Initialisierungsphase dar. Dabei werden die geheimen Daten (die Nachricht) durch die Kodierung nicht verändert. Statt dessen werden separate Korrekturdaten erstellt. Diese beschreiben den Raum erlaubter Kodeworte.

Anspruch 6 stellt eine vorteilhafte Ausführungsform der Authentifizierungsphase dar. Dabei wird zunächst das verschlüsselte Kodewort anhand des biometrischen Merkmals entschlüsselt. Das Verschlüsselungsverfahren soll die Eigenschaft haben, dass einzelne umgefallene Bits keinen Einfluss auf andere Bits haben. Ein geeignetes Verschlüsselungsverfahren ist die Anwendung der bitweisen exklusiven Oder-Regel (XOR).

Anspruch 7 stellt eine weitere Variante der Initialisierungsphase dar. Dabei werden in Abhängigkeit vom biometrischen Merkmal separate Korrekturdaten erstellt.

Anspruch 8 stellt eine Variante der Authentifizierungsphase dar. Dabei werden zunächst in Abhängigkeit vom biometrischen Merkmal separate Korrekturdaten erstellt. In einem weiteren Schritt wird das in der Initialisierungsphase gemessene biometrische Merkmal wiederhergestellt. Dies geschieht anhand dieser Korrekturdaten, und zwar den in der Initialisierungsphase erstellten Korrekturdaten und des in der Authentifizierungsphase gemessen biometrischen Merkmals. In einem weiteren Schritt werden die geheimen Daten anhand der wiederhergestellten biometrischen Merkmalsdaten entschlüsselt.

Anspruch 9 stellt eine Variante des in Anspruch 7 beschriebenen Verfahrens dar. Dabei werden die Korrekturdaten durch Berechnung von Paramteren, die aus dem biometrischen Merkmal gewonnen wurden, modulo n erstellt. Anhand dieser Daten werden Werte, deren Abweichung vom wahren Wert kleiner gleich n ist, auf den wahren Wert abgebildet, während Werte, deren Abweichung größer n ist auf einen zufälligen Wert abgebildet werden.

Anspruch 10 stellt eine Variante des in Anspruch 8 beschriebenen Verfahrens dar. Die Authentifizierungs-Korrekturdaten werden, analog zu dem in Anspruch 9 beschriebenen Verfahren, Berechnung von Paramteren, die aus dem biometrischen Authentifizierungsmerkmal gewonnen wurden, modulo n erstellt. Die Wiederherstellung der biometrischen Merkmalsdaten erfolgt, indem die Differenz der Reste ermittelt wird. Diese ist gerade die Differenz der Werte, wenn die Abweichung kleiner n ist.

Anspruch 11 beschreibt eine Ausführungsform, bei der das Korrekturverfahren benutzerspezifisch ist. Auf diese Weise kann die Korrekturkapazität an die Varianz der biometrischen Merkmale innerhalb eines Benutzers angepasst werden.

Gemäß Anspruch 12 erfolgt innerhalb des zweiten Schrittes für die Schaffung einer Quantifizierungsmöglichkeit des Aufwands von brute-force Attacken und damit, bei geeigneter Auslegung des Systems, einer generellen Quantifizierung des Systems hinsichtlich des Schutzes durch Biometrie, zusätzlich eine Zerlegung der digitalisierten Merkmals in einen öffentlichen und nicht-öffentlichen bzw. geheimen Teil. Dadurch, dass lediglich der nichtöffentliche Teil des biometrischen Merkmals zur für die Kodierung des Signaturschlüssels herangezogen wird, bleibt der Aufwand für eine brute-force Attacke quantifizierbar.

Gemäß Anspruch 13 werden zur Zerlegung der digitalisierten biometrischen Merkmalsdaten vorzugsweise empirische Erhebungen verwendet, da diese derzeit am einfachsten durchzuführen sind.

Gemäß Anspruch 14 wird vorzugsweise aus den digitalisierten biometrischen Merkmalsdaten bzw. aus dem nicht-öffentlichen Anteil davon mit Hilfe einer Hash-Funktion für die Kodierung des privaten Schlüssels bzw. Signaturschlüssels ein Hash-Wert erstellt. Dies hat den Vorteil einer Reduktion der Merkmalsdaten auf einen Bitstring fester Länge und damit auch einer Vereinfachung der Kodierung des zugehörigen Signaturschlüssel, die dann beispielsweise einfach mit einer XOR-Verknüpfung durchgeführt werden kann.

Gemäß Anspruch 15 wird weiterhin vorzugsweise aus den digitalisierten biometrischen Merkmalsdaten, die in der Authentifizierungsphase erstellt werden, mit Hilfe einer Hash-Funktion ein Hash-Wert erstellt, der mit bereits gespeicherten Hash-Werten vorausgegangener Authentifizierungen verglichen wird. Da die Hash-Funktion eine besondere Ausprägung von sogenannten Einweg-Funktionen darstellt, besitzt sie die Eigenschaft der Kollisionsfreiheit. Unter Kollisionsfreiheit versteht man in der Kryptographie, dass ähnliche, aber nicht identische Texte völlig unterschiedliche Prüfsummen ergeben sollen. Jedes Bit des Textes muss die Prüfsumme beeinflussen. Dass heißt vereinfacht gesagt, dass die Funktion bei identischen Eingabewerten immer genau einen identischen Ausgabewert fester Bitlänge liefert. Diese Eigenschaft macht sich das anmeldungsgemäße Verfahren hierbei zunutze, da bei der wiederholten Erfassung des gleichen biometrischen Merkmals es, wie bereits erwähnt, nahezu unmöglich ist, dass man exakt zwei identische Messdatensätze erhält. Wenn der Vergleich zwischen dem aktuellen und den gespeicherten Hash-Werten daher zu einem positiven Ergebnis führt, ist dies ein starkes Indiz für die Möglichkeit, dass man einer Replay-Attacke ausgesetzt ist. Demzufolge kann die Sicherheit durch Abbruch der Authentifizierung gewährleistet werden.

Gemäß den Ansprüchen 16 und 17 werden vorzugsweise als für das Verfahren in Frage kommende biometrische Merkmale der Verhaltensbiometrie verwendet. Diese haben den Vorteil, dass sie nur schwer nachgeahmt werden können. Ein einfaches Kopieren von Mustern oder Merkmalen ist dabei nahezu ausgeschlossen.

Gemäß Anspruch 17 verwendet das anmeldungsgemäße Verfahren als Merkmal der Verhaltensbiometrie die handschriftliche Unterschrift, da diese leicht in dynamische und statische Anteile zerlegt werden kann, die wiederum der Zerlegung des biometrischen Merkmals in geheime und öffentliche Teile dienen.

Gemäß Anspruch 18 wird vorzugsweise die handschriftliche Unterschrift derart in einen öffentlichen und einen geheimen Teil zerlegt, dass der geheime Teil der Unterschrift eine echte Untermenge der dynamischen Information ist, wodurch eine Quantifizierung ermöglicht wird bzw. weiterhin möglich ist.

Gemäß Anspruch 19 wird das in Frage kommende biometrische Merkmal mehrmals gemessen und digitalisiert, um bei der digitalen Erfassung der biometrischen Merkmalsdaten deren Fehlertoleranz bzw. Varianzbestimmung zu verbessern.

Gemäß Anspruch 20 wird vorzugsweise für die Schlüsselgenerierung ein herkömmliches Public-Key-Verfahren vorgeschlagen, da dieses weitverbreitet ist und zuverlässig arbeitet. Gemäß den Ansprüchen 21 bis 27 wird eine Vorrichtung vorgeschlagen, mit der das anmeldungsgemäße Verfahren auf einfache Weise durchgeführt werden kann.

Das anmeldungsgemäße Verfahren ermöglicht somit den Schutz von Daten in einem gegenüber dem Stand der Technik erhöhten Maßstab. Darüber hinaus ermöglicht das anmeldungsgemäße Verfahren die Kodierung bzw. Verschlüsselung des Signaturschlüssels, ohne dass dabei durch Speicherung von geheimen Daten neue Angriffspunkte für Attacken gegen das Signaturverfahren geschaffen werden. Das anmeldungsgemäße Verfahren sowie die anmeldungsgemäße Vorrichtung ermöglicht weiterhin die sichere Authentifizierung von Personen oder Gruppen. Das anmeldungsgemäße Verfahren ermöglicht weiterhin, einen reproduzierbaren Wert aus einem biometrischen Merkmal zu ermitteln, der als Eingabe für ein kryptographisches Verfahren, wie zum Beispiel PIN oder RSA verwendet werden kann. Außerdem ist das Verfahren bzw. die Vorrichtung grundsätzlich einer Quantifizierung für den Schutz durch Biometrie, d.h. dem Abschätzen des Aufwandes einer brute-force Attacke zugänglich. Im Gegensatz zu dem anmeldungsgemäßen Verfahren können bestehende Verfahren andere Angriffe wie SST oder STX nicht ausschließen, d.h. nicht sicherstellen, dass brute-force die beste Angriffsmethode ist. Brute-force ist jedoch die einzige Attacke, die etwa im Gegensatz zu Diebstahl des biometrischen Prototyps oder dergleichen, überhaupt quantifizierbar ist. Ist nun der geheime Anteil des biometrischen Merkmals mindestens ebenso lang wie der Signaturschlüssel selbst, so ist ein Angriff auf das biometrische Merkmal mindestens ebenso aufwendig wie eine brute-force Attacke auf den Signaturschlüssel. Damit lässt sich aber der Aufwand, der mindestens nötig ist, um mit brute-force Attacken den Signaturschlüssel zu raten, zahlenmäßig angeben. Somit ist die Sicherheit des anmeldungsgemäßen Verfahrens, das zum Schutz von Daten ein Signaturverfahren mit zusätzlicher Verschlüsselung des Signaturschlüssels durch Biometrie verwendet, quantifizierbar.

Weitere Merkmale und Vorteile der Erfindung ergeben sich aus den Unteransprüchen und nachfolgenden Beschreibung eines Ausführungsbeispiels anhand der Zeichnung.

Es zeigt:
Fig. 1 einen Verlauf einer Transaktion eines herkömmlichen Smart Card Systems unter Verwendung eines Authentifizierungsverfahrens mit digitaler Signatur;
Fig. 2 einen Verlauf einer herkömmlichen Transaktion unter Verwendung digitaler Signaturen;
Fig. 3 einen Verlauf einer herkömmlichen Transaktion unter Verwendung digitaler Signaturen und eines zusätzlichen Authentifizierungsschritts;
Fig. 4 eine schematische Darstellung des Vergleichs der Korrekturdaten aus der anmeldungsgemäßen Initialisierungs- und Authentifizierungsphase;
Fig. 5 ein Ablaufschema der anmeldungsgemäßen Initialisierungs- und Authentifizierungsphase;
Fig. 6 eine Tabelle, in die Angriffsmöglichkeiten und deren Abwehrmaßnahmen auf digitale Signaturverfahren, die zusätzlich Biometrie verwenden, aufgeführt sind.
Fig. 7 die Übertragung der Kodierungs- und Dekodierungsstufe eines kodierungstheoretischen Verfahrens auf die Korrektur fehlerbehafteter biometrischer Merkmale.

Im folgenden werden elektronische Transaktionen als ein Anwendungsbeispiel für das Initialisierungs- und Authentifizierungsverfahren diskutiert.

Bei elektronischen Transaktionen ist es von zentraler Bedeutung, dass die Identität der Transaktionspartner sowie die Integrität der Transaktionsdaten eindeutig feststellbar ist. Unterschiedliche Verfahren, die Identität der Transaktionspartner zu authentifizieren, sind in Gebrauch:

Bei der Identifizierung durch Wissen geschieht die Identifizierung durch ein shared secret; in der Praxis meist Passwort, Passphrase oder PIN, bei der Identifizierung durch Besitz geschieht die Identifizierung über den Signaturschlüssel, Personalausweis usw. und bei der Identifizierung durch Biometrie durch Fingerabdruck, Retinabild.

Unterschiedliche Kombinationen aus diesen Verfahren sind ebenso denkbar. So identifiziert sich jemand, der mit ec-Karte Transaktionen tätigt, durch Besitz (die Karte) und durch Wissen (die PIN).

Einige Authentifizierungsverfahren können höheren Sicherheitsanforderungen nicht genügen. So besteht bei der Identifizierung durch Wissen immer die Gefahr, dass Benutzer die Passphrase oder PIN notieren. Außerdem können Passphrase oder PIN kryptoanalytisch aus gespeicherten Daten ermittelt werden. Um diesen Gefahren zu begegnen, setzen viele neuere Authentifizierungsverfahren digitale Signaturen ein. Digitale Signaturen haben noch einen weiteren Vorteil: Sie stellen gleichzeitig die Integrität der signierten Daten sicher: Signatur und Daten sind untrennbar mit einander verwoben.

Digitale Signaturen, die auf einer Smart Card oder auf einem anderen portablen Medium gespeichert sind, stellen lediglich einen Sonderfall der "Identifizierung durch Wissen" dar. Deshalb wird dieser häufig zusätzlich durch eine PIN oder durch Biometrie geschützt.

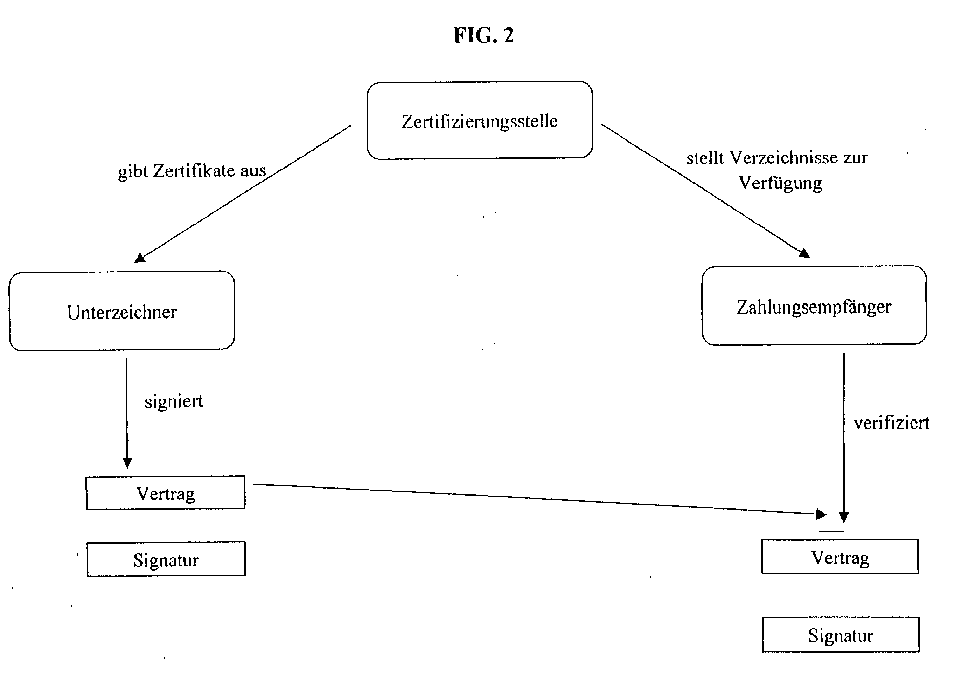

Fig. 2 stellt eine konventionelle Transaktion unter Einsatz digitaler Signaturen dar. Die Transaktion umfasst folgende Schritte: Eine Zertifizierungsstelle gibt Zertifikate aus und führt Verzeichnisse, die jeder digitalen Signatur einen rechtmäßigen Besitzer zuordnen. Der Unterzeichner signiert einen Vertrag. Der Zahlungsempfänger validiert die Signatur anhand des öffentlichen Schlüssels des Unterzeichners. Gegebenenfalls konsultiert der Zahlungsempfänger das Verzeichnis, das die Zertifizierungsstelle führt.

Diese Form der Transaktion hat mehrere Nachteile, nämlich dass der Zahlungsempfänger darauf angewiesen ist, den öffentlichen Schlüssel des Signierenden zu kennen, dass letztendlich nur eine Zuordnung der Zahlung zu einem privaten Signaturschlüssel geschieht, d.h., ob der rechtmäßige Besitzer des Schlüssels tatsächlich derjenige ist, der den Vertrag signiert hat, zunächst unklar bleibt, und dass sich der Kunde und der Zahlungsempfänger auf ein Format verständigen müssen.

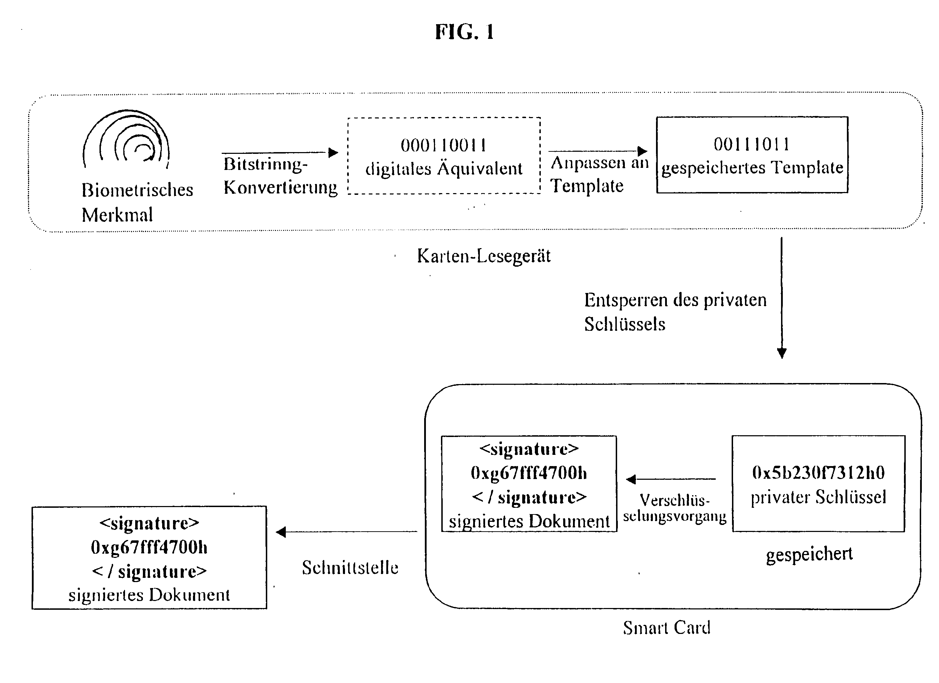

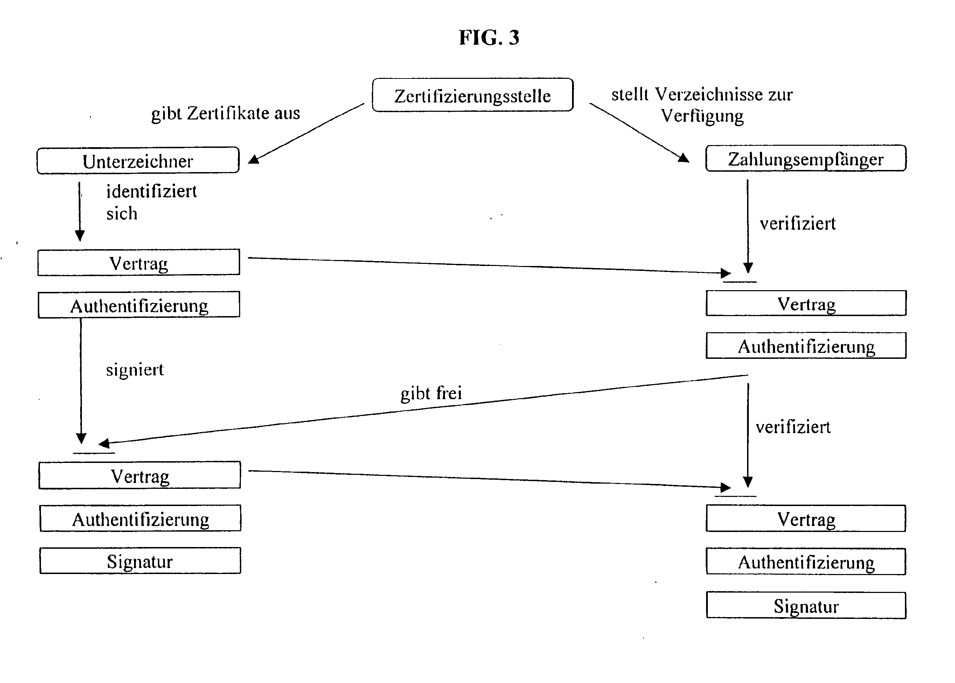

Bei einigen Verfahren kann der Kunde den Vertrag nur signieren, wenn er sich zuvor identifiziert hat. Das Verfahren läuft dann so ab, wie in Fig. 1 und 3 dargestellt. In Fig. 1 sind Daten, die nur zeitweilig existieren, mit unterbrochenen Linien umrahmt, und Daten, die über einen längeren Zeitraum existieren, mit durchgehenden Linien. In Fig. 3 wird eine herkömmliche Transaktion mit digitaler Signatur und Authentifizierung dargestellt. Die Authentifizierung kann dabei durch Messung eines biometrischen Merkmals geschehen. Der Zahlungsempfänger ist dabei darauf angewiesen, den öffentlichen Schlüssel des Signierenden und ein Muster des Merkmals zu kennen. Hierzu ist zu beachten, dass eine digitale Repräsentation des gemessenen biometrischen Merkmals über ein Datennetz übertragen wird. Anschließend vergleicht die Verkäuferseite das gemessene biometrische Merkmal mit einem gespeicherten Muster (Template). Diesbezüglich sind Angriffe möglich, nämlich MMA, RA, STT, STX.

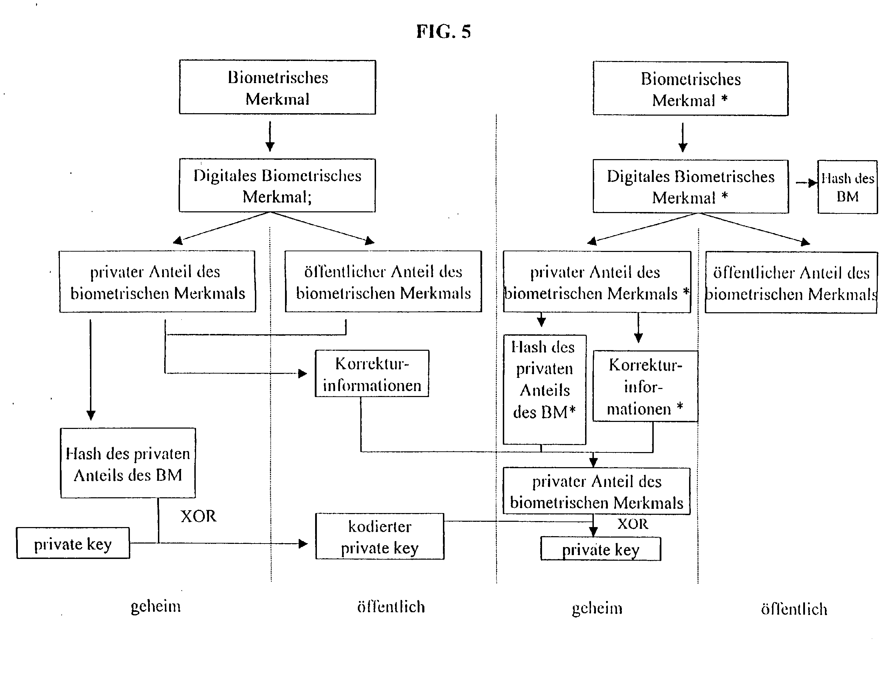

Fig. 5 zeigt das anmeldungsgemäße Signaturverfahren in einem prinzipiellen Ablaufdiagramm. Dabei werden die beiden unabhängigen Verfahren der Initialisierungs- und Authentifizierungsphase gemeinsam dargestellt. Es umfasst folgende Schritte: Erstens wird in einer Initialisierungsphase wird das biometrische Merkmal des Benutzers gemessen und digitalisiert. Dieses wird als Prototyp P des Merkmals bezeichnet. Gegebenenfalls wird das biometrische Merkmal mehrfach gemessen. In diesem Fall wird der Prototyp P aus mehreren Messwerten ermittelt und für die Initialisierung der Vorrichtung herangezogen. Idealerweise wird der Prototyp P anschließend in einen öffentlichen und einen geheimen Teil zerlegt. Keinesfalls wird ein vollständiges biometrisches Merkmal, geheime Teile eines Merkmals oder ein Prototyp desselben gespeichert. Zweitens werden in einem zweiten Initialisierungsschritt aus dem Prototyp P Korrekturdaten errechnet, welche die Rekonstruktion gemessener biometrischer Merkmale ermöglicht, wenn sie innerhalb eines frei wählbaren Toleranzintervalls liegen. In einem dritten Initialisierungsschritt werden drittens die Daten, die zur Durchführung des kryptographischen Verfahrens notwendig sind, errechnet. In einem vierten Initialisierungsschritt werden viertens die privaten Daten des kryptographischen Verfahrens mit dem Prototyp P oder Teilen von P in geeigneter Weise verknüpft. In den Authentifizierungsphasen wird fünftens das biometrische Merkmal des Benutzers erneut gemessen und digitalisiert. In der bevorzugten Ausführungsform ist das biometrische Merkmal die Unterschrift des Benutzers, wobei dynamische Charakteristika der Unterschrift miterfasst werden. Die Unterschrift kann auf dem Display der Vorrichtung geleistet werden. Hierbei ist zu beachten, dass der Benutzer nicht aufgefordert wird, sein biometrische Merkmal "fremden" Geräten zu überlassen. Ein Diebstahl des biometrischen Merkmals ist damit erschwert. Gegebenenfalls wird das biometrische Merkmal sechstens in einen "Klassifikationsteil" und einen "Verifikationsteil" zerlegt. Dabei umfasst der "Klassifikationsteil" lediglich öffentlich zugängliche Informationen. Wenn die vorläufige Zuordnung des biometrischen Merkmals zu einem Benutzers anhand der Informationen des "Klassifikationsteils" misslingt, wird der Benutzer zurückgewiesen. Der "Verifikationsteil" umfasst ausschließlich nicht öffentlich zugängliche Informationen. In der bevorzugten Ausführungsform können das dynamische Charakteristika der Unterschrift sein. Aus dem "Verifikationsteil" oder aus anderen Informationen, die nur dem legitimen Besitzer des geheimen Schlüssels zugänglich sind, wird siebtens der Prototyp P, oder ein daraus berechneter Wert rekonstruiert, der dem Benutzer in eindeutiger Weise zugeordnet ist. Dabei wird die Kollisionsfreiheit der Zuordnungsvorschrift in Bezug auf unterschiedliche Benutzer gefordert. Aus diesem Wert - und gegebenenfalls Zusatzdateien - wird achtens mittels einer kollisionsfreien Funktion, deren Umkehrfunktion schwer berechenbar ist, ein Wert fester Länge generiert. Ein Beispiel für eine solche Funktion ist Message Digest 5 (MD5). Dieser Wert dient als Ausgangswert um den privaten Signaturschlüssels zu bestimmen. Alternativ wird der private Signaturschlüssel direkt aus dem Wert P ermittelt. Die Vorrichtung signiert neuntens die Rechnung oder Teile der Rechnung. Anschließend wird der Signaturschlüssel sofort wieder gelöscht.

Im folgenden wird die Rekonstruktion des Wertes P in der Authentifizierungsphase genauer beschrieben. Zur Abbildung auf den Wert P wird ein Algorithmus herangezogen, der folgende Eigenschaften hat: a) Er bildet legitime Eingabewerte, wie zum Beispiel digitalisierte biometrische Merkmale, zuverlässig auf einen Wert W ab. Im vorliegenden Fall ist das der Prototyp P; b) Er bildet illegitime Eingabewerte nicht auf den Wert W ab; c) Er ist skalierbar in Bezug auf die erlaubte Varianz legitimer Werte; d) Die Abbildungsfunktion ist außerhalb des Intervalls, in welchen die legitimen Eingabewerte liegen, unstetig. Das heißt, dass Gradientenverfahren nicht anwendbar sind; e) Er erlaubt keine Rückschlüsse auf Eigenschaften legitimer Eingabewerte.

Die Eigenschaften a), b) und c) beschreiben die Zuverlässigkeit des Verfahrens. Die Eigenschaften d) und e) besagen, dass eine Analyse des Verfahrens zur Berechnung des Wertes W einem Angreifer keine Vorteile bietet. Das heißt, dass der Aufwand eines Angriffs auf das System ist gleich dem Aufwand einer brute-force Attacke. Dies gilt jedoch nur, wenn die Eingabewerte - zum Beispiel Teile der biometrischen Daten - nicht öffentlich sind.

Die oben genannten Forderungen werden durch die Dekodierstufen von gängigen Fehlerkorrekturverfahren erfüllt. Voraussetzung für die Anwendung dieser Verfahren ist, dass der Wert W, auf den abgebildet werden soll, im Ausgangswert redundant kodiert ist.

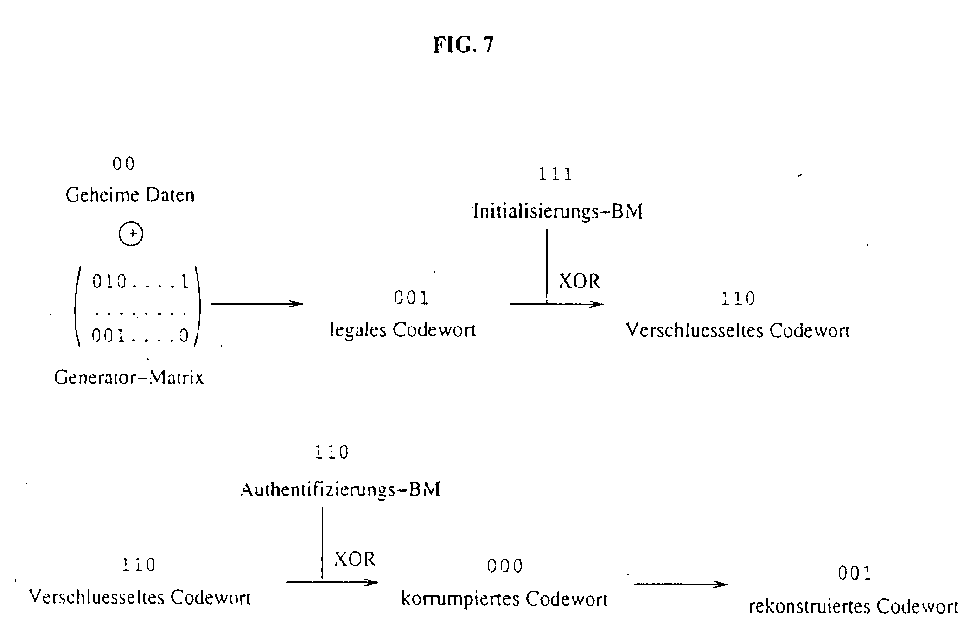

Fig. 7 zeigt die Übertragung der Kodierungs- und Dekodierungsstufe eines kodierungstheoretischen Verfahrens auf die Korrektur fehlerbehafteter biometrischer Merkmale. In der oberen Zeile ist die Initialisierungsphase dargestellt. Die untere Zeile zeigt die Authentifizierungsphase. In der Initialisierungsphase werden zunächst mittels einer Generator Matrix (oder eines Generator-Polynoms) die geheimen Daten (z.B. der private Schlüssel in einem Public-Key-Verfahren) auf ein legales Kodewort abgebildet. Das digitalisierte biometrische Merkmal (Initialisierungs-BM) verschlüsselt dieses Kodewort durch die bitweises XOR Operation.

In der Authentifizierungsphase (untere Zeile) wird das verschlüsselte Kodewort durch ein biometrisches Merkmal, das zu einem späteren Zeitpunkt gemessen wurde, entschlüsselt (das Authentifizierungs-BM). Da das biometrische Authentifizierungs-Merkmal nicht exakt mit dem in der Initialisierungsphase gemessenen biometrischen Merkmal übereinstimmt, ergibt sich ein fehlerbehaftetes Codewort. Dieses kann durch die Dekodierungsstufe des kodierungstheoretischen Verfahrens rekonstruiert werden.

Im folgenden wird das bereits im Prinzip geschilderte anmeldungsgemäße Signaturverfahren anhand eines bevorzugten Ausführungsbeispiels im Detail beschrieben werden:

### 1. Initialisierungsphase

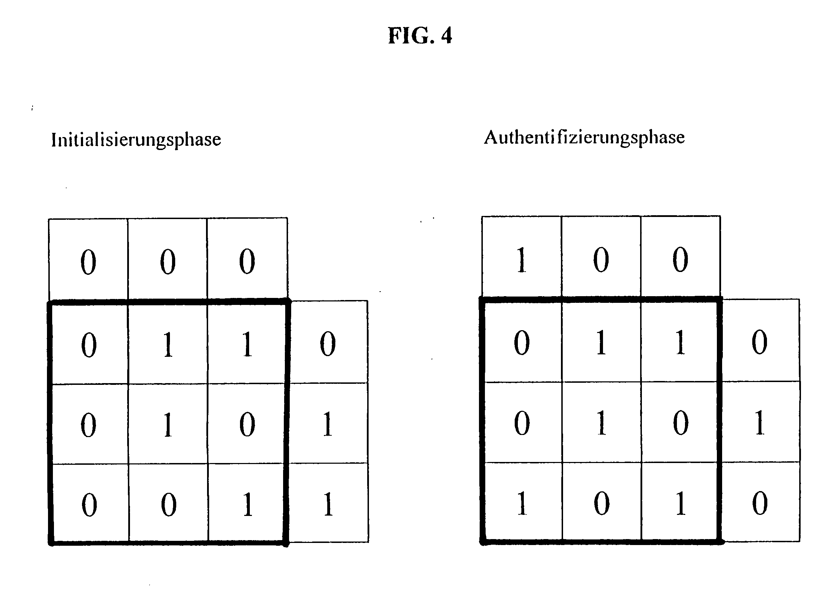

(a) In einer Initialisierungsphase unterschreibt der legitime Benutzer mehrfach auf einem Display der Vorrichtung.
(b) Die Unterschrift wird digitalisiert. Hierbei werden statische und dynamische Informationen erfasst.
(c) Ein Muster oder Prototyp P der Unterschrift wird berechnet.
(d) Die Varianz zwischen den digitalisierten Unterschriften wird bestimmt.
(e) Statische Informationen der Unterschrift werden zu Klassifikationszwecken gespeichert.
(f) Die dynamischen Informationen der Unterschrift werden mit statistischen und psychologischen Informationen über Unterschriften der Gesamtpopulation verglichen. Dynamische Information, die sich nicht mit Kenntnissen über die statistischen Eigenschaften von Unterschriften gewinnen lässt, und die für den Unterzeichner kennzeichnend ist, wird als "geheim" klassifiziert.
(g) Die binäre Repräsentation des Merkmals wird in Quadraten der Kantenlänge n angeordnet, wie es in Fig. 4 gezeigt ist. Der Wert von n spielt für die Diskussion des Verfahrens keine Rolle. Je größer n ist, desto geringere Fehlerraten korrigiert das Verfahren. Der Wert von n ist so zu wählen, dass das Verfahren die gewünschte Anzahl an Fehlern korrigiert. Er wird anhand der eventuell in Schritt 1(d) gemessenen Varianz, statistischer, psychologischer oder sonstiger Erkenntnisse so gewählt, dass die Fehlerrate, die innerhalb der gemessenen biometrischen Merkmale eines Benutzers zu erwarten ist, korrigiert wird. Dabei kann bei unterschiedlichen Teilmerkmalen unterschiedliche Fehlerraten angenommen werden. Die Länge des Merkmals ist nicht geheim. Kann das letzte Quadrat nicht vollständig gefüllt werden, kann ein Rechteck verwendet werden. Fehlende Bits werden mit Nullen aufgefüllt.
(h) Von jeder Zeile und jeder Spalte wird die Parität notiert. Das sind 2n-1 unabhängige Werte.
(i) Die Paritäten werden beispielsweise in der anmeldungsgemäßen Vorrichtung abgespeichert. Obwohl sie im Prinzip ebenfalls geschützt werden könnten, werden sie im folgenden als öffentliche Information angesehen. Es bleiben pro Quadrat (n-1)2 geheime Bits.
(j) Im letzten Quadrat werden die Paritäten mehrerer Spalten zusammengefasst, so dass die Paritäten zu konstanten Spaltenlängen gehören.
(k) Alle Unterschriften werden gelöscht.
(l) Für ein geeignetes Public-Key-Verfahren wird ein Schlüsselpaar erzeugt.
(m)Der geheime Schlüssel wird mit Hilfe der binären Repräsentation des Merkmals geschützt, z.B. indem das bitweise XOR des geheimen Schlüssels mit dem biometrischen Merkmal (oder dem gehashten Wert davon) abgespeichert wird und der geheime Schlüssel gelöscht wird.
(n) Mit Hilfe von statistischen Daten über die Gesamtbevölkerung, die als allgemein zugänglich anzusehen sind, wird die Zahl N der Bits des Merkmals bestimmt, die als geheim anzusehen sind, weil diese weder geraten werden können noch für die Fehlerkorrektur verbraucht sind. Aufgrund der Fehlerkorrekturinformation kann die Anzahl der bei einer Attacke zu ratenden Bits pro Quadrat um 2n-1 reduziert werden, da der Angreifer das Korrekturverfahren kennt. Die sich hier ergebende Zahl ist ein Maß für die Sicherheit des Verfahrens.
(o) Alle geheimen Teile des Prototyps der Unterschrift werden gelöscht.
(p) Ein Schlüsselpaar, bestehend aus einem öffentlichen und einem geheimen Schlüssel wird generiert.
(q) Der Wert P und der private Signaturschlüssel werden gelöscht.

### 2. Authentifizierungsphase

(a) In einer Authentifizierungsphase unterschreibt der legitime Benutzer auf dem Display einer Vorrichtung
(b) Die Unterschrift wird mit einem geeigneten Eingabegerät digitalisiert; hierzu werden statische und dynamische Informationen erfasst. Das kann insbesondere das gleiche Gerät wie in der Initialisierungsphase sein.
(c) Ein Hashwert der digitalisierten Unterschrift wird berechnet. Dieser kann in nachfolgenden Authentifizierungsphasen mit den Hashwerten neuer Unterschriften verglichen werden. Solche digitalisierten Unterschriften, die mit vorher geleisteten Unterschriften exakt übereinstimmen, werden zurückgewiesen. Dies erschwert replay-Attacken.
(d) Öffentliche Informationen der Unterschrift werden zu Klassifikationszwecken herangezogen, wenn die Vorrichtung auf mehrere Benutzer initialisiert wurde.
(e) Die binäre Repräsentation des Merkmals wird in die Quadrate der Initialisierungsphase eingetragen.
(f) Die Paritäten der Zeilen und Spalten werden berechnet.
(g) Etwaige Einbitfehler werden durch Vergleich mit den abgespeicherten Paritäten lokalisiert und korrigiert. (Siehe Fig. 4.)
(h) Befinden sich in einem Quadrat mehr als ein Fehler, scheitert die Korrektur. Das ist insbesondere dann der Fall, wenn eine unzureichende Fälschung eingegeben wurde.
(i) Das korrigierte Merkmal wird zur Wiederherstellung des geheimen Schlüssels des Public-Key-Verfahrens verwendet. Bei dem beispielhaften Verfahren aus 1 (m) wird das bitweise XOR des Merkmals (oder des gehashten Wertes) mit dem Ergebnis von 1 (m) berechnet. Dieser Wert ist der geheime Schlüssel.
(j) Das zu signierende Dokument wird mittels des neu generierten privaten Schlüssels signiert.
(k) Der private Signaturschlüssel wird gelöscht.
(l) Das signierte Dokument wird übertragen.
(m)Die Fehlerkorrekturfunktion lässt keine Rückschlüsse darauf zu, wie weit das digitalisierte biometrische Merkmal von der Grenze des Korrekturintervalls entfernt ist. Gradientenverfahren sind daher keine geeignete Angriffsmöglichkeit.

## Patentansprüche

1. Verfahren zum Schutz von geheimen Daten, das eine Authentifizierungsphase mit folgenden Schritten aufweist:
(a) Bereitstellung eines biometrischen Merkmals;
(b) Digitalisierung des biometrischen Merkmals zur Erstellung von digitalisierten biometrischen Authentifizierungsmerkmalsdaten; **gekennzeichnet durch**
(c) Entschlüsselung eines verschlüsselten Kodewortes, erstellt **durch** Kodierung der geheimen Daten, anhand der digitalisierten biometrischen Authentifizierungsmerkmalsdaten;
(d) Wiederherstellung der geheimen Daten mittels der Entschlüsselung des Kodewortes anhand der digitalisierten biometrischen Authentifizierungsmerkmalsdaten und anhand eines kodierungstheoretischen Korrekturverfahrens mit Korrekturkapazität, wobei die Korrekturkapazität frei wählbar ist.

2. Verfahren nach Anspruch 1, das eine Initialisierungsphase mit folgenden Schritten aufweist:
(a) Bereitstellung eines biometrischen Merkmals;
(b) Digitalisierung des biometrischen Merkmals zur Erstellung von digitalisierten biometrischen Merkmalsdaten;
(c) Bereitstellung von geheimen Daten;
(d) Verschlüsselung anhand der digitalisierten biometrischen Merkmalsdaten und fehlertolerante Kodierung der geheimen Daten.

3. Verfahren nach Anspruch 2, das die auf einander folgenden Schritte aufweist:
(a) Fehlertolerante Kodierung der geheimen Daten zur Erstellung eines Kodeworts;
(b) Verschlüsselung des Kodeworts anhand der digitalisierten biometrischen Merkmalsdaten zur Erstellung eines verschlüsselten Kodeworts.

4. Verfahren nach Anspruch 3, wobei das Kodewort durch eine generierende Matrix erzeugt wird.

5. Verfahren nach Anspruch 2, das den folgenden Schritt aufweist: Erstellung von Initial-Korrekturdaten zur Beschreibung des Raums erlaubter Kodeworte.

6. Verfahren nach Anspruch 2, das den folgenden Schritt aufweist: Bereitstellung von Initialisierungs-Korrekturdaten anhand der digitalisierten biometrischen Merkmalsdaten.

7. Verfahren nach Anspruch 1, das folgende Schritte aufweist:
(a) Erstellung von Authentifizierungs-Korrekturdaten anhand der digitalisierten biometrischen Authentifizierungsmerkmalsdaten;
(b) Wiederherstellung der digitalisierten biometrischen Merkmalsdaten anhand der Authentifizierungs- und Initial-Korrekturdaten;
(c) Entschlüsselung verschlüsselter geheimer Daten anhand der wiederhergestellten digitalisierten biometrischen Merkmalsdaten.

8. Verfahren nach Anspruch 6, wobei die Initial-Korrekturdaten durch Berechnung der digitalisierten biometrischen Merkmalsdaten modulo n erstellt werden, wobei n die Kantenlänge von Quadraten ist, in denen die binäre Repräsentation des Merkmals angeordnet wird.

9. Verfahren nach Anspruch 7, wobei die Authentifizierungs-Korrekturdaten durch Berechnung der Authentifizierungsmerkmalsdaten modulo n erstellt werden, wobei n die Kantenlänge von Quadraten ist, in denen die binäre Repräsentation des Merkmals angeordnet wird.

10. Verfahren nach Anspruch 2 bis 9, das benutzerspezifische Initial-Korrekturdaten und/oder benutzerspezifische fehlertolerante Kodierung aufweist.

11. Verfahren nach einem der Ansprüche 2 bis 10, bei dem aus dem biometrischen Merkmal ein öffentlicher und ein geheimer Teil bestimmt oder geschätzt wird.

12. Verfahren nach Anspruch 11, bei dem die Trennung in einen öffentlichen und einen geheimen Teil des biometrischen Merkmals mit Hilfe von empirischen Erhebungen erfolgt.

13. Verfahren nach Anspruch 1 bis 11, bei dem mit Hilfe einer Hash-Funktion aus den digitalisierten biometrischen Merkmalsdaten ein Hash- Wert erstellt wird.

14. Verfahren nach einem der Ansprüche 1 bis 13, bei dem mit Hilfe einer Hash-Funktion aus den digitalisierten biometrischen Authentifizierungs-Merkmalsdaten ein Hash-Wert erstellt wird.

15. Verfahren nach einem der vorhergehenden Ansprüche, bei dem das biometrischen Merkmal eine Verhaltensbiometrie ist.

16. Verfahren nach einem der vorhergehenden Ansprüche, bei dem das biometrische Merkmal aus einer handschriftlich geleitsteten Unterschrift besteht.

17. Verfahren nach einem der vorhergehenden Ansprüche, bei dem die handschriftlich geleistete Unterschrift in einen öffentlichen und einen geheimen Teil zerlegt wird und der geheime Teil eine echte Untermenge der dynamischen Information der Unterschrift ist.

18. Verfahren nach einem der vorhergehenden Ansprüche, bei dem die Bereitstellung und/oder Digitalisierung des biometrischen Merkmals mehrfach erfolgt.

19. Verfahren nach einem der vorhergehenden Ansprüche, bei dem die geheimen Daten mit einem Public-Key- Verfahren erzeugt werden.

20. Vorrichtung zur Durchführung des Verfahrens nach einem der vorhergehenden Ansprüche mit:
(a) einem Mittel zur Digitalisierung eines biometrischen Merkmals zur Erstellung von digitalisierten biometrischen Merkmalsdaten;
(b) einem Mittel zur Bereitstellung von geheimen Daten; **gekennzeichnet durch**
(c) ein Mittel zur fehlertoleranten Kodierung und zur Dekodierung der geheimen Daten; sowie
(d) ein Mittel zur Ver- und Entschlüsselung der fehlertolerant kodierten geheimen Daten mit Hilfe der digitalisierten biometrischen Merkmalsdaten.

21. Vorrichtung nach Anspruch 20, die ein Mittel zur Erstellung von Kodeworten aufweist.

22. Vorrichtung nach Anspruch 20, die ein Mittel zur Erstellung von Initial-Korrekturdaten aufweist.

23. Vorrichtung nach einem der Ansprüche 20 bis 22, die ein Mittel zur Bereitstellung eines Hashwerts aufweist.

24. Vorrichtung nach einem der Ansprüche 20 bis 23, die ein Mittel zur Zerlegung des biometrischen Merkmals in einen öffentlichen und einen geheimen Teil aufweist.

25. Vorrichtung nach Anspruch 24, die ein Mittel zur Zerlegung in einen öffentlichen und einen geheimen Teil des biometrischen Merkmals mit Hilfe von statistischen Erhebungen aufweist.

26. Vorrichtung nach Anspruch 20 bis 25, die ferner ein Mittel zur Erfassung einer handschriftlich geleisteten Unterschrift als biometrisches Merkmal aufweist.

## Claims

1. A method for protecting secret data which has an authentication phase having the following steps:
(a) providing a biometric feature;
(b) digitizing the biometric feature to create digitized biometric authentication feature data;
**characterized by**
(c) decrypting an encrypted code word, created by coding the secret data, on the basis of the digitized biometric authentication feature data;
(d) recovering the secret data by means of the encryption of the code word on the basis of the digitized biometric authentication feature data and on the basis of a coding-theory correction method with correction capacity, the correction capacity being freely selectable.

2. The method according to claim 1 having an initialization phase with the following steps:
(a) providing a biometric feature;
(b) digitizing the biometric feature to create digitized biometric feature data;
(c) providing secret data;
(d) encrypting on the basis of the digitized biometric feature data and fault-tolerantly coding the secret data.

3. The method according to claim 2 having the consecutive steps of:
(a) fault-tolerantly coding the secret data to create a code word;
(b) encrypting the code word on the basis of the digitized biometric feature data to create an encrypted code word.

4. The method according to claim 3, wherein the code word is generated by a generating matrix.

5. The method according to claim 2 having the following step: creating initial correction data to describe the space of allowed code words.

6. The method according to claim 2 having the following step: providing initialization correction data on the basis of the digitized biometric feature data.

7. The method according to claim 1 having the following steps:
(a) creating authentication correction data on the basis of the digitized biometric authentication feature data;
(b) recovering the digitized biometric feature data on the basis of the authentication and initial correction data;
(c) decrypting encrypted secret data on the basis of the recovered digitized biometric feature data.

8. The method according to claim 6, wherein the initial correction data are created by calculating the digitized biometric feature data modulo n, where n is the edge length of squares in which the binary representation of the feature is disposed.

9. The method according to claim 7, wherein the authentication correction data are created by calculating the authentication feature data modulo n, where n is the edge length of squares in which the binary representation of the feature is disposed.

10. The method according to claims 2 to 9 having user-specific initial correction data and/or user-specific fault-tolerant coding.

11. The method according to any of claims 2 to 10, wherein a public and a secret part are determined or estimated from the biometric feature.

12. The method according to claim 11, wherein the separation into a public and a secret part of the biometric feature is effected with the aid of empirical inquiries.

13. The method according to claims 1 to 11, wherein a hash value is created from the digitized biometric feature data with the aid of a hash function.

14. The method according to any of claims 1 to 13, wherein a hash value is created from the digitized biometric authentication feature data with the aid of a hash function.

15. The method according to any of the above claims, wherein the biometric feature is a behavioral biometric.

16. The method according to any of the above claims, wherein the biometric feature consists of a handwritten signature.

17. The method according to any of the above claims, wherein the handwritten signature is broken down into a public and a secret part and the secret part is a proper subset of the dynamic information of the signature.

18. The method according to any of the above claims, wherein the providing and/or digitizing of the biometric feature is effected several times.

19. The method according to any of the above claims, wherein the secret data are generated by a public-key method.

20. An apparatus for carrying out the method according to any of the above claims having:
(a) a means for digitizing a biometric feature to create digitized biometric feature data;
(b) a means for providing secret data;
**characterized by**
(c) a means for fault-tolerantly coding and for decoding the secret data; and
(d) a means for encrypting and decrypting the fault-tolerantly coded secret data with the aid of the digitized biometric feature data.

21. The apparatus according to claim 20 having a means for creating code words.

22. The apparatus according to claim 20 having a means for creating initial correction data.

23. The apparatus according to any of claims 20 to 22 having a means for providing a hash value.

24. The apparatus according to any of claims 20 to 23 having a means for breaking down the biometric feature into a public and a secret part.

25. The apparatus according to claim 24 having a means for breaking down the biometric feature into a public and a secret part with the aid of statistical inquiries.

26. The apparatus according to claims 20 to 25 further having a means for capturing a handwritten signature as a biometric feature.

## Revendications

1. Procédé de protection de données secrètes, comprenant une phase d'authentification incluant les étapes suivantes :
a) mise à disposition d'une caractéristique biométrique ;
b) numérisation de la caractéristique biométrique pour la constitution de données de caractéristique d'authentification biométriques numérisées ;
**caractérisé par**
c) décryptage d'un mot de code crypté, constitué par codage des données secrètes, au moyen des données de caractéristique d'authentification biométriques numérisées ;
d) reconstitution des données secrètes par le décryptage du mot de code au moyen des données de caractéristique d'authentification biométriques numérisées et au moyen d'un processus de correction appliquant une théorie de codage et ayant capacité de correction, la capacité de correction pouvant être librement sélectionnée.

2. Procédé selon la revendication 1, comprenant une phase d'initialisation incluant les étapes suivantes :
a) mise à disposition d'une caractéristique biométrique ;
b) numérisation de la caractéristique biométrique pour la constitution de données de caractéristique biométriques numérisées ;
c) mise à disposition de données secrètes ;
d) cryptage au moyen des données de caractéristique biométriques numérisées et codage des données secrètes insensible aux défaillances.

3. Procédé selon la revendication 2, comprenant les étapes successives suivantes :
a) codage des données secrètes insensible aux défaillances pour la constitution d'un mot de code ;
b) cryptage du mot de code au moyen des données de caractéristique biométriques numérisées pour la constitution d'un mot de code crypté.

4. Procédé selon la revendication 3, le mot de code étant généré par une matrice génératrice.

5. Procédé selon la revendication 2, comprenant l'étape suivante : constitution de données initiales de correction pour la description de l'espace de mots de code autorisés.

6. Procédé selon la revendication 2, comprenant l'étape suivante : mise à disposition de données de correction d'initialisation au moyen des données de caractéristique biométriques numérisées.

7. Procédé selon la revendication 1, comprenant les étapes suivantes :
a) constitution de données de correction d'authentification au moyen des données de caractéristique d'authentification biométriques numérisées ;
b) reconstitution des données de caractéristique biométriques numérisées, au moyen des données de correction d'authentification et initiales ;
c) décryptage de données secrètes cryptées, au moyen des données de caractéristique biométriques numérisées reconstituées.

8. Procédé selon la revendication 6, les données de correction initiales étant constituées par calcul modulo n des données de caractéristique biométriques numérisées, n étant la longueur de côté de carrés dans lesquels la représentation binaire de la caractéristique est disposée.

9. Procédé selon la revendication 7, les données de correction d'authentification étant constituées par calcul modulo n des données de caractéristique d'authentification, n étant la longueur de côté de carrés dans lesquels la représentation binaire de la caractéristique est disposée.

10. Procédé selon revendication de 2 à 9, qui comprend des données de correction initiales propres à l'utilisateur et / ou codage insensible aux défaillances propre à l'utilisateur.

11. Procédé selon une des revendications de 2 à 10, dans lequel une partie publique et une partie secrète est déterminée ou estimée à partir de la caractéristique biométrique.

12. Procédé selon la revendication 11, dans lequel la division de la caractéristique biométrique en une partie publique et une partie secrète a lieu à l'aide de relevés empiriques.

13. Procédé selon revendication de 1 à 11, dans lequel une valeur hash est constituée à l'aide d'une fonction hash à partir des données de caractéristique biométriques numérisées.

14. Procédé selon une des revendications de 1 à 13, dans lequel une valeur hash est constituée à l'aide d'une fonction hash à partir des données de caractéristique d'authentification biométriques numérisées.

15. Procédé selon une des revendications précédentes, dans lequel la caractéristique biométrique est une biométrie comportementale.

16. Procédé selon une des revendications précédentes, dans lequel la caractéristique biométrique consiste en une signature apposée à la main.

17. Procédé selon une des revendications précédentes, dans lequel la signature apposée à la main est divisée en une partie publique et une partie secrète, et la partie secrète est une vraie sous-quantité de l'information dynamique de la signature.

18. Procédé selon une des revendications précédentes, dans lequel la mise à disposition et / ou digitalisation de la caractéristique biométrique a lieu plusieurs fois.

19. Procédé selon une des revendications précédentes, dans lequel les données secrètes sont générées par un processus public key.

20. Dispositif destiné à la réalisation du procédé selon une des revendications précédentes avec :
a) un moyen de digitalisation d'une caractéristique biométrique pour la constitution de données de caractéristique biométriques numérisées. ;
b) un moyen de mise à disposition de données secrètes ;
**caractérisé par**
c) un moyen de codage insensible aux défaillances et de décodage des données secrètes ; ainsi que
d) un moyen de cryptage et de décryptage des données secrètes codées de manière insensible aux défaillances, à l'aide des données de caractéristique biométriques numérisées.

21. Dispositif selon la revendication 20, qui comporte un moyen de constitution de mots de code.

22. Dispositif selon la revendication 20, qui comporte un moyen de constitution de données initiales de correction.

23. Dispositif selon une des revendications de 20 à 22, qui comporte un moyen de mise à disposition d'une valeur hash.

24. Dispositif selon une des revendications de 20 à 23, qui comporte un moyen de division de la caractéristique biométrique en une partie publique et une partie secrète.

25. Dispositif selon la revendication 24, qui comporte un moyen de division de la caractéristique biométrique en une partie publique et une partie secrète à l'aide de relevés statistiques.

26. Dispositif selon revendication de 20 à 25, qui comporte en outre un moyen de reconnaissance d'une signature apposée à la main en tant que caractéristique biométrique.
